# EUROPEAN PATENT APPLICATION

(11) **EP 3 385 604 A1**
(43) Date of publication of application: **10.10.2018**
(21) Application number: 17382184.4
(22) Date of filing: 06.04.2017
(51) Int. Cl.: F21S 8/10

(54) **LIGHTING DEVICE**

(71) Applicant: Valeo Iluminacion, 23600 Martos (ES)
(72) Inventor: FERNANDEZ, Ricardo, 23600 MARTOS (ES); CABANNE, Damien, 23600 MARTOS (ES); PASTOR, Ramon, 23600 Martos (ES); MADORRAN TIL, Gonzalo, 23600 MARTOS (ES); RUIZ, Francisco, 23600 MARTOS (ES); BENTABOL, Fernando, 23600 MARTOS (ES); MARTINEZ, Juan Manuel, 23600 MARTOS (ES)

(57) **Abstract**

The invention provides for a lighting device (1) comprising a housing (2) with an access hole (3), an internal element (4), an external element (5) and an intermediate part (6). The internal element (4) is able to be accessed through the access hole (3). The external element (5) installed at the outside of the housing (2) for at least partially covering the hole (3). The intermediate part (6), removably attachable to the housing (1). The external element (5) is removably attachable to the intermediate part (6), in such a way that when the external element (5) is attached, at least part of the intermediate part (6) is located between the external element (5) and the access hole (3).

## Description

### TECHNICAL FIELD

This invention belongs to the field of lighting devices, including electronic parts and replaceable elements.

### STATE OF THE ART

Current automobile lighting solutions need to be efficient both in operation and in space using. However, these requirements often make it difficult to access to parts which are inside these lighting devices.

Document US8317380 and document FR3009059 disclose a lighting device which comprises a housing with an opening, so that a fan may act through it and provide heat dissipation to the interior of the lighting device.

These lighting devices comprise holes in their housings, but these holes are not suitable for reaching inner parts, as they are not intended to solve this problem.

Standard holes, which are created in the housing to access an interior element, make the space of the hole useless, which is a problem, since current lighting devices uses almost all the space of the exterior of the housing.

### DESCRIPTION OF THE INVENTION

The invention provides a solution for this problem by means of lighting device according to claim 1. Preferred embodiments of the invention are defined in dependent claims.

In an inventive aspect, the invention provides a lighting device comprising
a housing with an access hole;
an internal element installed in the lighting device, able to be accessed through the access hole;
an external element installed at the outside of the housing for at least partially covering the hole;
an intermediate part, removably attachable to the housing;
wherein the external element is removably attachable to the intermediate part, in such a way that when the external element is attached, at least part of the intermediate part is located between the external element and the access hole.

This lighting device provides an easy way of replacing the internal element, but without stealing useful surface to the rest of the elements comprised in the lighting device, since the space occupied by the access hole is advantageously used by an external element.

The concept of an external element servicing the lighting device should be understood as any external element which takes part in the correct operation of the lighting device, not being necessarily involved in lighting functions. Some examples of these external elements could be a sensor or a fan.

The fact that the external element is attached to the intermediate part is particularly advantageous, since the external element may be any element, regardless its shape, since it is the intermediate part which has the shape suitable for covering the hole.

In some particular embodiments, the internal element is removably installed in the lighting device and is able to pass through the access hole.

These embodiments provide a way for the internal element to be replaced in an easy way, since the external element is not any more an obstacle for the internal element to be replaced.

In some particular embodiments, the external element is an electronic element.

In these embodiments, more functionalities may be added to the lighting device, due to the electronic element servicing it.

In some particular embodiments, the whole intermediate part is located between the external element and the access hole.

These embodiments advantageously save some space, since there is no portion of the intermediate part which is useless occupying some room in the external surface of the lighting device.

In some particular embodiments, the lighting device comprises at least a pair of semiconductor light sources, one semiconductor light source being adapted to provide a low beam function and other semiconductor light source being adapted to provide a high beam function.

The arrangement of the invention may be therefore applied to such a lighting device, where semiconductor light sources, such as LEDs, are used to provide low and high beam. As a consequence, a semiconductor light source could be accessed from the outside without the need of dismounting the complete lighting device.

In some particular embodiments, the lighting device is suitable for providing the function of a position lamp.

The arrangement of the invention may be therefore also applied to such a lighting device, where light sources are used to provide a signalling function. As a consequence, this light source could be accessed from the outside without the need of dismounting the complete lighting device.

In some particular embodiment, the intermediate part comprises at least one orifice suitable for cables and/or wires to pass through.

These embodiments allow the external element be in direct electric communication with some elements comprised in the interior of the lighting device, by means of wires or cables directly crossing the intermediate part.

In some particular embodiments, the lighting device further comprising heat dissipation means, arranged to dissipate heat from the internal element.

These embodiments advantageously provide a way of heat dissipation for the internal element, which may also be accessed by the access hole.

In some particular embodiment, the intermediate part comprises ventilation slots, suitable for a fan to dissipate heat from an interior zone of the lighting device.

These embodiments allow a fan to take advantage of the ventilation slots; the intermediate element serves both as a removable cap to access the internal element and as part of the heat dissipation means, since the fan is acting through the ventilation slots comprised in it.

In some particular embodiments, the internal element comprises at least one of a fan, a motor, a printed circuit board and/or an electronic module.

The invention may be applied to such a wide variety of internal elements.

In some particular elements, the internal element is attached to the intermediate part.

In these embodiments, the operation of reaching the internal element is easier, since there is no need to detaching two elements, but only one group, since the internal element is already outside the lighting element when the intermediate part is removed.

In some particular embodiments, the lighting device further comprises guides for guiding the internal element to be extracted.

In these embodiments, the operation of extracting the internal element is easier, as guides provide an aid for the operator reaching the internal element.

In some particular embodiments, the lighting device further comprises
a light source; and
an optical element suitable for receiving light emitted by the light source and for shaping the light into a light pattern projected outside the lighting device.

An optical element is an element that has some optical properties to receive a light beam and emit it in a certain direction and/or shape, as a person skilled in automotive lighting would construe without any additional burden. Reflectors, collimators, light guides, projection lenses, etc., or the combination thereof are some examples of these optical elements.

In some particular embodiments, the access hole has a surface of at least 40 cm², preferably at least 60 cm² and more preferably at least 95 cm².

These embodiments advantageously comprise an access hole big enough for an operator to introduce their hand through it, being therefore capable of accessing the internal element. This is useful for replacement or checking its status.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 shows a lighting device according to the invention.
Figure 2 shows the lighting device of figure 1, but after removing some elements.
Figure 3 shows a different embodiment of a lighting device according to the invention.
Figure 4 shows a lighting device being part of a position lamp.

### DETAILED DESCRIPTION OF THE INVENTION

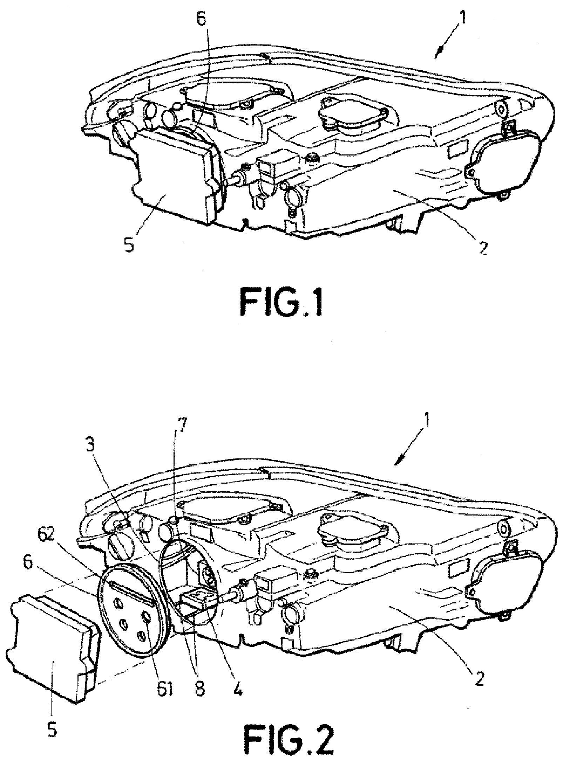

Figure 1 shows a lighting device 1 according to the invention. This lighting device 1 comprises
a housing 2 comprising an access hole (which is not seen in this figure);
an internal element (which is not seen in this figure) removably installed inside the lighting device 1, able to pass through the access hole;
an external element 5 servicing the lighting device 1;
an intermediate part 6, removably attachable to the housing 2;
wherein the external element 5 is removably attachable to the intermediate part 6, in such a way that when the external element 5 are attached, part of the intermediate part 6 is located between the external element 5 and the access hole.

The housing comprises an access hole (which is not seen in this figure), capped by the intermediate part 6 and the external element 5 which is attached to this intermediate part 6.

In other particular embodiments, the external element 5 may be attached directly to the housing 2, instead of being attached to the intermediate part 6.

In other embodiments, the whole intermediate part 6 is located between the external element 5 and the housing 2.

Figure 2 shows the lighting device 1 of figure 1, but when both the electronic 5 and the intermediate part 6 are removed, letting the access hole 3 being accessible.

In the embodiment of this figure, the access hole 3 is suitable for the hand of the operator being introduced in it, so it has a surface of at least 40 cm², preferably at least 60 cm² and more preferably at least 95 cm². In other cases, where the size of the access hole is smaller, and a hand cannot be introduced in it, the operator may access the internal element 4 by some pincers or tweezers.

The intermediate part 6 comprises some orifices 61 for cables or wires to pass through these orifices 61. Thus, the intermediate part 6 is electrically connected with the interior elements of the lighting device 1.

In this case, the internal element 4 is a printed circuit board, although in other cases, it may be, among any others, a fan, a motor, and/or an electronic module.

The lighting device 1 further comprises heat dissipation means, arranged to dissipate heat from the internal element. In this case, the heat dissipation means is a fan 7, and the intermediate part 6 comprises ventilation slots 62, suitable for the fan 7 to dissipate heat from an interior zone of the lighting device 1. Although the slots 62 are comprised in a removable part, such as the intermediate part 6, the fan 7 is normally turned on when the intermediate element 6 is attached to the housing 2 of the lighting device 1; when the intermediate element 6 is detached, the fan might not be needed, since a greater opening is created by the detaching of this intermediate element 6 from the housing 2.

The lighting device 1 further comprises guides 8 as an aid for the internal element 4 to be extracted. These guides 8 are located inside the housing 2, and provide a path for the internal element 4 between an operation position and the access hole 3, so that it may be easily extracted from the interior of the housing 2.

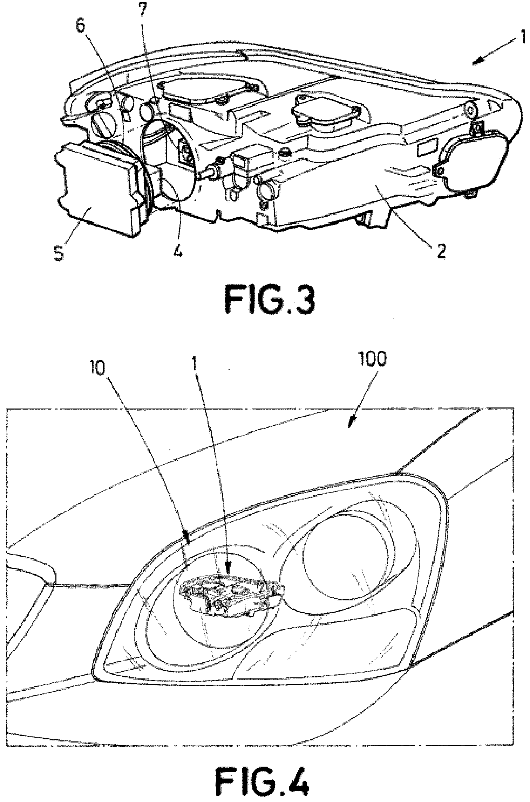

Figure 3 shows another embodiment of a lighting device according to the invention, wherein the internal element 4 is attached to the intermediate part. This figure shows the lighting device 1 when the intermediate part 6 (and therefore the internal element 4) has been detached from the lighting device 1.

In figure 4, the lighting device 1 is part of a position lamp 10 installed in an automotive vehicle 100, and allows the light source of this lamp, or some other element, be accessed and replaced without the need of dismantling the whole lighting device 1.

## Claims

1. Lighting device (1) comprising
a housing (2) with an access hole (3);
an internal element (4) installed in the lighting device (1), able to be accessed through the access hole (3);
an external element (5) installed at the outside of the housing (2) for at least partially covering the hole (3);
an intermediate part (6), removably attachable to the housing (1);
wherein the external element (5) is removably attachable to the intermediate part (6), in such a way that when the external element (5) is attached, at least part of the intermediate part (6) is located between the external element (5) and the access hole (3).

2. Lighting device according to claim 1, wherein the internal element (4) is removably installed in the lighting device (1) and is able to pass through the access hole (3).

3. Lighting device according to any of the preceding claims, wherein the external element is an electronic element.

4. Lighting device (1) according to any of the preceding claims, wherein the whole intermediate part (6) is located between the external element (5) and the access hole (3).

5. Lighting device (1) according to any of preceding claims, wherein the lighting device (1) comprises at least a pair of semiconductor light sources, one semiconductor light source being adapted to provide a low beam function and other semiconductor light source being adapted to provide a high beam function.

6. Lighting device (1) according to any of preceding claims, wherein the lighting device (1) is suitable for providing a position light function.

7. Lighting device (1) according to any of preceding claims, wherein the intermediate part (6) comprises at least one orifice (61) suitable for cables and/or wires to pass through.

8. Lighting device (1) according to any of preceding claims, wherein the lighting device (1) further comprising heat dissipation means (7), arranged to dissipate heat from the internal element.

9. Lighting device (1) according to claim 8, wherein the intermediate part (6) comprises ventilation slots (62), suitable for the heat dissipation means (7) to dissipate heat from an interior zone of the lighting device (1).

10. Lighting device (1) according to any of preceding claims, wherein the internal element (4) comprises at least one of a fan, a motor, a printed circuit board and/or an electronic module.

11. Lighting device (1) according to any of preceding claims, wherein the internal element (4) is attached to the intermediate part (6).

12. Lighting device (1) according to any of preceding claims, further comprising guides (8) for guiding the internal element (4) to be extracted.

13. Lighting device (1) according to any of the preceding claims, further comprising
a light source; and
an optical element suitable for receiving light emitted by the light source and for shaping the light into a light pattern projected outside the lighting device.

14. Lighting device (1) according to any of preceding claims, wherein the access hole (3) has a surface of at least 40 cm², preferably at least 60 cm² and more preferably at least 95 cm².
